# EUROPÄISCHE PATENTANMELDUNG

(11) **EP 1 391 831 A2**
(43) Veröffentlichungstag der Anmeldung: **25.02.2004**
(21) Anmeldenummer: 03018015.2
(22) Anmeldetag: 07.08.2003
(51) Int. Cl.: G06F 17/27, G06F 3/023

(54) **Verfahren zur technisch unterstützten Eingabe von Textnachrichten auf elektronischen Geräten**

(30) Priorität: 08.08.2002 DE 10236574
(71) Anmelder: T-Mobile Deutschland GmbH, 53227 Bonn (DE)
(72) Erfinder: Kunkel, Helmut, 67098 Bad Dürkheim (DE)

(57) **Zusammenfassung**

Die Erfindung betrifft ein Verfahren zur technisch unterstützen Eingabe von Textnachrichten auf elektronischen Geräten, das sich auszeichnet durch ein fortlaufendes Registrieren der von einem Benutzer jeweils am häufigsten eingegebenen Begriffe, ein automatisches Zuordnen der registrierten Begriffe zu den vom Benutzer verwendeten Eingaben und/oder Eingabesequenzen, ein Speichern der Begriffe zusammen mit den zugeordneten Eingaben und/oder Eingabesequenzen in einer Auswahlliste, und ein Abrufen eines Begriffs anhand einer Verwendung von mindestens einer zuvor gespeicherten und dem Begriff zugeordneten Eingabe und/oder Eingabesequenz. Der bisher notwendige, zeitaufwändige Vorgang des Blätterns in der Auswahlliste sowie das separate Definieren von Begriffen wird weitestgehend durch Nutzung des erfindungsgemäßen Verfahrens automatisiert.

## Beschreibung

Die Erfindung betrifft ein Verfahren zur technisch unterstützen Eingabe von Textnachrichten auf elektronischen Geräten.

Bei den elektronischen Geräten handelt es sich in erster Linie um Endgeräte zur Eingabe und Darstellung von Texten, insbesondere sind dabei Mobiltelefone, Festnetztelefone oder sogenannte Palmtops bzw. Persönliche Digitale Assistenten (PDA) zu nennen. Viele dieser Endgeräte verfügen nicht über eine vollständige alphanumerische Tastatur zur Eingabe der Texte, so dass Verfahren zur Erstellung von Textnachrichten bekannt sind, die eine Eingabe der Begriffe erleichtern.

Im Bereich der Mobiltelefonie ist die Erstellung und Versendung von SMS-Nachrichten (SMS) sehr beliebt. Das Verfassen dieser Textnachrichten wird je nach Art des verwendeten Endgeräts (Mobiltelefons) technisch unterstützt durch eine spezielle Eingabesoftware.

Dabei kann der Benutzer des Endgerätes in der Regel über eine Voreinstellung auswählen, ob die Nachricht im herkömmlichen Eingabemodus oder in einem technisch unterstützen Eingabemodus verfasst werden soll.
Im herkömmlichen Eingabemodus sind alle Zeichen, welche auf der Tastatur abgebildet sind, durch Einzel- oder Mehrfachbetätigung der entsprechenden Tasten aufrufbar. Endgeräteabhängig sind auch Sonderzeichen über die gleichzeitige Bedienung mehrerer Tasten verfügbar.
Beispiel: auf der Zifferntaste "2" sind ebenfalls die Buchstaben "a", "b","c" abgebildet. Um den Buchstaben C auf dem Display abzubilden, muss die Taste "2" dreimal in kurzem Abstand hintereinander gedrückt werden.

Im technisch unterstützten Eingabemodus hält das Endgerät eine gespeicherte Auswahlliste von Begriffen vor. Diese wird auf dem Display als Vorschlag angezeigt, wenn die Kombination der bisher durchgeführten manuellen Tastenbetätigung mit einem bereits hinterlegten Begriffsmuster übereinstimmt. Die angezeigte Auswahl korrespondiert alphabetisch mit der getroffenen Tastenbetätigung. Innerhalb der Auswahlliste kann "geblättert" werden. Allgemein umfasst die Auswahlliste eine relativ begrenze Anzahl von Begriffen, z.B. insgesamt 150 Begriffe.
Stimmt die beabsichtigte Wortwahl des Benutzers mit keinem der in der Auswahlliste enthaltenen Begriffe überein, so kann der Benutzer den gewünschten Begriff selbst neu in die Auswahlliste einpflegen.

Dabei besteht der Nachteil, dass ein solcher eigener Eintrag in diese Auswahlliste ein bereits vorhandenes Wort ersetzt. Es handelt sich dabei also speichertechnisch um eine Substitution des Begriffs, d.h. der gewünschte Begriff wird nicht ergänzend gespeichert, sondern ein anderer, z.B. als Listeneintrag zuletzt gepflegter Begriff wird zeitgleich gelöscht. Infolge ist der geleistete Aufwand für die Erstellung eines neuen Begriffes schnell hinfällig.

Die Aufgabe der Erfindung besteht darin, ein Verfahren zur technisch unterstützen Eingabe von Textnachrichten auf elektronischen Geräten vorzuschlagen, das eine einfacherer und komfortablere Erstellung von Textnachrichten auf diesen Geräten ermöglicht.

Diese Aufgabe wird erfindungsgemäß durch die Merkmale des Patentanspruchs 1 gelöst.

Erfindungsgemäß erfolgt ein fortlaufendes Registrieren der von einem Benutzer jeweils am häufigsten eingegebenen Begriffe, ein automatisches Zuordnen der registrierten Begriffe zu den vom Benutzer verwendeten Eingaben und/oder Eingabesequenzen, ein Speichern der Begriffe zusammen mit den zugeordneten Eingaben und/oder Eingabesequenzen in einer Auswahlliste, und ein Abrufen eines Begriffs anhand einer Verwendung von mindestens einer zuvor gespeicherten und dem Begriff zugeordneten Eingabe und/oder Eingabesequenz.

Die Eingabe der Begriffe durch den Benutzer kann mittels einer Tastatur, einer sogenannten Touch Screen, durch Spracheingabe oder durch eine Verwendung von über eine Schnittstelle zugänglichen externen Daten erfolgen. Im folgenden wird vorzugsweise eine Tastatureingabe beschrieben.

Vorteilhafte Ausgestaltungen und Weiterbildungen der Erfindung sind in den Unteransprüchen angegeben.

Neben dem fortlaufenden Registrieren der von einem Benutzer häufig benutzen Begriffe, sieht eine Weiterbildung des Verfahrens vor, dass Begriffe registriert und verwendet werden, die Teil von beim verwendeten Gerät über externe Schnittstellen eingehenden Informationen oder Nachrichten sind. Die Wortwahl bei der Erstellung von Nachrichten ist individuell geprägt. Jedoch kann das jeweilige persönliche Verhältnis zwischen einem Sender und einem Empfänger inhaltlich oft den gleichen oder einen ähnlichen Sprachgebrauch bestimmen. Demzufolge kann sich zum Beispiel ein privater Informationsaustausch in der Formulierung und der Verwendung von Begriffen deutlich von einem geschäftlichen Informationsaustausch unterscheiden. Auch die verwendete Sprache in der Textnachricht spielt eine Rolle. Die Erfindung sieht daher in einer bevorzugten Ausgestaltung vor, dass mehrere Auswahllisten vorhanden sind oder vorgehalten werden, die jeweils an die Art und Sprache eines zur erstellenden Textes angepasst sind. Der Benutzer kann dann eine geeignete Auswahlliste auswählen und verwenden.

Somit ist es möglich, eine jeweilige Auswahlliste beim Verfassen einer Nachricht an einen bestimmten Empfänger optimal zu gestalten, indem dessen "Sprache" und "Sprachgebrauch" zur weiteren Kommunikation wieder aufgegriffen wird, wobei die Auswahlliste mit Inhalten bereits erhaltener bzw. versendeter Nachrichten korrespondiert.

Das Verfahren registriert demnach fortlaufend die vom Benutzer jeweils am häufigsten verwendeten Begriffe, vorzugsweise ab dem Zeitpunkt der Erstellung einer ersten Nachricht und unabhängig vom verwendeten Eingabemodus. Sukzessive erfolgt ein automatisches Zuordnen dieser Begriffe zu den verwendeten Tastenkombinationen.

Dabei entsteht ein nutzersensitives Profil der vom dem Benutzer vorzugsweise verwendeten Begriffe. Das Verfahren sieht die Möglichkeit vor, dieses Profil zur weiteren Verwendung als Datensatz auf andere Speichermedien zu übertragen. Ebenso kann das Verfahren vorsehen, Inhalte zur Erstellung und Erweiterung von Auswahllisten über eine Schnittstelle, z.B. einen Dateneingang, bereitzustellen. So kann zum Beispiel zur Erstellung einer Nachricht in einer anderen Sprache eine spezielle, auf einem Datenträger gespeicherte oder online zur Verfügung gestellte Auswahlliste verwendet werden, auf die über die Schnittstelle zugegriffen werden kann.

Der zeitaufwändige Vorgang des Blätterns in der Auswahlliste sowie das separate Definieren von Begriffen wird weitestgehend durch Nutzung des erfindungsgemäßen Verfahrens automatisiert.

Es ist ferner vorteilhaft, die bisher verwendbare Liste von maximal 150 bzw. 250 Begriffen durch Erhöhen der Speicherkapazität des Geräts zu erweitern. Die Speicherkapazität kann erhöht werden durch
- Vergrößerung des Speichers auf der SIM-Karte
- Vergrößerung des Speichers des Endgeräts
- ein zusätzliches Speicherbauteil.
   - um welches das Endgerät erweitert werden kann, oder
   - zu dem ein Verbindungsaufbau (drahtlos/-gebunden) erfolgen kann oder eine Kombination dieser Maßnahmen.

In einer weiteren, vorteilhaften Ausgestaltung der Erfindung ist vorgesehen, dass die Auswahlliste - zusätzlich zu einer Aufreihung von Begriffen oder Formulierungen - die Möglichkeit zum Aufruf und zur Bearbeitung von Nachrichtenvorlagen bietet. Diese Vorlagen weisen beispielsweise die Struktur eines Formblatts auf. Es können z.B. Vorlagen für Kurzmitteilungen, Glückwünsche oder Auftragsdokumente vorgesehen sein. Die Voraussetzung für diese Funktionalitäten werden durch das verwendete Endgerät und Telekommunikationsnetz geschaffen.

Optional kann dem Benutzer der Dienst einer Rechtschreibkorrektur zur Verfügung gestellt werden. Diese kann in Form einer Software realisiert sein, die in einer mit dem Endgerät benutzten Chipkarte, einem Speicher des Endgeräts oder einem verwendeten Telekommunikationsnetz gespeichert sein kann.

Mögliche Ausgestaltungen der Erfindung werden nachfolgend erläutert.

Die erforderliche Definition, welche Tasten des Endgeräts letztlich welche Funktion zum Bestätigen, Blättern etc. ausüben ist mehr oder minder beliebig definierbar. Im weiteren kann sogar eine individuelle Konfiguration durch den Nutzer vorgehalten sein.

Die Tasten des Endgeräts können wie im herkömmlichen Eingabemodus bedient werden. Wurde keine separate Definition in Form einer Voreinstellung vorgenommen, so muss mindestens eine Tastenbedienung erfolgen, um eine Auswahl von Begriffen oder Begriffskonstellationen, z.B. "mit freundlichen Grüßen" auf dem Display des Endgeräts anzuzeigen.

Der Nutzer hat nun entweder die Möglichkeit, den angezeigten Eintrag der Auswahlliste zu bestätigen, in der Auswahlliste zu "blättern", um einen anderen Begriff auszuwählen, oder durch ein erneutes Bedienen der gleichen oder einer anderen Taste den angefangenen Begriff manuell weiter zu verfassen und die vorherige Auswahl abzulösen. Das führt im weiteren zur manuellen Fortschreibung des Begriffes infolge der Definition eines anderen Zeichens oder es wird eine neue Auswahl angezeigt, sofern der eben ergänzte Tastendruck ebenfalls als Kombination mit einer hinterlegten Wortwahl korrespondiert.

Für die Anzeige der Auswahlliste kann ein bestimmter Bereich auf dem Display oder einer separaten Anzeige oder eine Sprachansage vorgesehen sein.

Ebenso kann vorgesehen sein, dass die Anzeige ab dem Zeitpunkt des letzten Aufrufes für ein bestimmte Dauer sichtbar bleibt. Natürlich wird dabei die angezeigte Auswahl in Abhängigkeit der Tastaturbetätigung fortlaufend aktualisiert.

Generell gibt es beim Eingabeverfahren zwei Möglichkeiten für die Kombinatorik.

### Möglichkeit A:

Es sind möglichst wenige, das heißt mindestens ein Tastendruck erforderlich, um entsprechende Begriffe der Auswahlliste anzuzeigen. Somit wird die Auswahlliste relativ umfangreich, da der Benutzer die gewünschten Begriffe im wesentlichen über die Auswahlliste selektiert. Diese Möglichkeit wird vorzugsweise von Nutzern angewendet, die eine Bedienung der Auswahlliste, d.h. ein "Blättern" in der Auswahlliste bevorzugen.

### Möglichkeit B:

In dieser Betriebsart wird ein mehrfaches Tastendrücken unterstützt, z.B. bis zu vier Tastatureingaben. Das hat zur Folge, dass die Auswahlliste weniger umfangsreich ist und dadurch übersichtlicher wird, da der Benutzer die gewünschten Begriffe im wesentlichen über die Tastatureingabe selektiert. Diese Möglichkeit wird vorzugsweise von Nutzern angewendet, die eine Bedienung der Tastatur bevorzugen.

Erfindungsgemäß wird die Auswahlliste wird nach bestimmten Kriterien geordnet.

Zum einen erfolgt ein Ordnen der Auswahlliste priorisiert anhand der Häufigkeit der Verwendung einzelner Begriffe. Jede einzelne Eingabe bzw. Auswahl des Benutzers aktualisiert dabei das technische, statistische Element, welches die Auswahl sortiert und abbildet. Das heißt, dass die vom Benutzer häufig verwendeten Begriffe, z.B. "Hallo", bevorzugt in der Auswahlliste gespeichert werden.

Darüber hinaus erkennt das System Übereinstimmungen im Kontext der verfassten Begriffe. Dies erfolgt z.B. anhand des Satzbaus und der Interpunktion und gegebenenfalls anhand weiterer Kriterien, wie z.B. der Identität des vorgesehenen Empfängers. Dadurch wird die Auswahlliste auf Sinngehalt sortiert.

Das beschriebene Verfahren eignet sich nicht nur zur Erstellung von SMS-Nachrichten auf Mobiltelefonen.
In einer Weiterbildung der Erfindung kann das erfindungsgemäße Verfahren ebenfalls als Modul zum Einsatz kommen, z.B. bei der Transformation von SMS in Sprache z.B. unter Verwendung eines PC (Internet).
Es kann zur Qualitätssteigerung bei der Erkennung von Handschrift (Palm, PDA) dienen, zur Spracherkennung im Dialog mit einem Sprachserver oder der Transformation von gesprochenem Wort in Textform oder in Diktiergeräten.

Das vorgeschlagene Verfahren gestattet es, gespeicherte Zeichenfolgen, wie z.B. einzelne Wörter oder Begriffe, bei einem reduzierten Eingabeaufwand zu identifizieren und zu verwerten.

## Patentansprüche

1. Verfahren zur technisch unterstützen Eingabe von Textnachrichten auf elektronischen Geräten, mit den Schritten:
Fortlaufendes Registrieren der von einem Benutzer jeweils am häufigsten eingegebenen Begriffe,
Automatisches Zuordnen der registrierten Begriffe zu den vom Benutzer verwendeten Eingaben und/oder Eingabesequenzen,
Speichern der Begriffe zusammen mit den zugeordneten Eingaben und/oder Eingabesequenzen in einer Auswahlliste, und
Abrufen eines Begriffs anhand einer Verwendung von mindestens einer zuvor gespeicherten und dem Begriff zugeordneten Eingabe und/oder Eingabesequenz.

2. Verfahren nach Anspruch 1, **dadurch gekennzeichnet, dass** die Begriffe ab dem Zeitpunkt der Erstellung einer ersten Nachricht fortlaufend erfasst werden.

3. Verfahren nach einem der vorhergehenden Ansprüche, **dadurch gekennzeichnet, dass** die Auswahlliste priorisiert anhand der Häufigkeit der Verwendung einzelner Begriffe geordnet wird.

4. Verfahren nach einem der vorhergehenden Ansprüche, **dadurch gekennzeichnet, dass** anhand jeder einzelnen Eingabe bzw. Auswahl des Benutzers das technische, statistische Element, welches die Auswahl sortiert aktualisiert wird.

5. Verfahren nach einem der vorhergehenden Ansprüche, **dadurch gekennzeichnet, dass** Übereinstimmungen im Kontext der verfassten Begriffe anhand des Satzbaus und der Interpunktion und gegebenenfalls anhand weiterer Kriterien, erkannt werden.

6. Verfahren nach einem der vorhergehenden Ansprüche, **dadurch gekennzeichnet, dass** ein nutzersensitives Profil der vom dem Benutzer vorzugsweise verwendeten Begriffe erstellt wird.

7. Verfahren nach einem der vorhergehenden Ansprüche, **dadurch gekennzeichnet, dass** das nutzersensitive Profil zur weiteren Verwendung als Datensatz auf andere Speichermedien übertragbar ist.

8. Verfahren nach einem der vorhergehenden Ansprüche, **dadurch gekennzeichnet, dass** mindestens eine Eingabe erforderlich ist, um entsprechende Begriffe der Auswahlliste anzuzeigen.

9. Verfahren nach einem der vorhergehenden Ansprüche, **dadurch gekennzeichnet, dass** eine Eingabesequenz erforderlich ist, um entsprechende Begriffe der Auswahlliste anzuzeigen.

10. Verfahren nach einem der vorhergehenden Ansprüche, **dadurch gekennzeichnet, dass** Begriffe registriert und verwendet werden, die Teil von beim Gerät über externe Schnittstellen eingehenden Informationen oder Nachrichten sind.

11. Verfahren nach einem der vorhergehenden Ansprüche, **dadurch gekennzeichnet, dass** mehrere Auswahllisten vorgehalten werden, die vom Benutzer je nach der Art oder Sprache der zu erstellenden Textnachricht auswählbar sind.
